# EUROPEAN PATENT APPLICATION

(11) **EP 2 340 979 A1**
(43) Date of publication of application: **06.07.2011**
(21) Application number: 09815703.5
(22) Date of filing: 28.09.2009
(51) Int. Cl.: B62B 3/02, B62B 3/14, B62B 3/18

(54) **FOLDABLE TROLLEY FOR TRANSPORTING SHOPPING UP TO AN APARTMENT**

(30) Priority: 29.09.2008 ES 200802794
(71) Applicant: Rodriguez Santos, Juan Luis, 38292 Tegueste, S/C de Tenerife (ES)
(72) Inventor: Rodriguez Santos, Juan Luis, 38292 Tegueste, S/C de Tenerife (ES)
(74) Representative: PROPI, S.L.
(86) International application number: PCT/ES2009/000483
(87) International publication number: WO 2010/034858

(57) **Abstract**

The present invention relates to a foldable trolley with a sturdy structure mounted on wheels, which has two loading zones: a bottom zone formed with a basket having drop-down sides, and a top zone formed by three bars, also of the drop-down type, on which the bags of shopping can be hung, and which is designed for transporting up to an apartment the shopping or other products purchased previously in a shop, thereby facilitating the bothersome and sometimes problematic task faced with when having to carry shopping up one or more floors, as well as the arrangement of the products purchased in the location reserved for each one of them inside the apartment (refrigerator, larder, cupboards, etc.). Moreover, owing to the versatility of the invention, it can be converted into a tool useful for the transportation of the various domestic products, such as books, kitchenware, televisions, pictures, computers, etc., that are already inside the home.

## Description

### ART FIELD

The present invention relates to a foldable trolley with a sturdy structure mounted on wheels, which has two loading zones, a bottom zone formed with a basket having drop-down sides, and a top zone formed by three bars, also of the drop-down type, on which the bags of shopping can be hung, and which is designed for transporting up to an apartment the shopping or other products purchased previously in a shop, thereby facilitating the bothersome and sometimes problematic task faced with when having to carry shopping up one or more floors, as well as the arrangement of the products purchased in the location reserved for each one of them inside the apartment (refrigerator, larder, cupboards, etc.). Moreover, owing to the versatility of the invention, it can be converted into a tool useful for the transportation of the various domestic products, such as books, kitchenware, televisions, pictures, computers, etc., that are already inside the home.

### STATE OF THE ART

As in any supermarket or hypermarket we have at our disposal a trolley for making the shopping and then, once payment is made, take it to the vehicle, currently I do not know any trolley for use at home, or other contraption similar that the one presented here, that allows us, once parked in our garage or on the street, to put the bags, bottles, boxes, etc., back inside of it, in a comfortable manner, and carry it with ease up to our apartment.

### OBJECT OF THE INVENTION

The idea is novel in that this trolley allows us to:
- Carry it folded in the car, between front and rear seats, leaving the trunk free to put the shopping.
- Get it out in the garage and deploy easily.
- Hang on each of the three horizontal upper bars the bags of shopping that we are taking off the vehicle.

- Put into the lower basket all items that we have not entered into bags (bottles of water or milk, detergent boxes, etc.).
- Be transported up to the elevator without retaining it at all.
- Pass through the doors required without problems.
- Access to the apartment with all the shopping at once.

All of this without the task of transporting the shopping up to the home involves:
- Having to make multiple shopping uploads and downloads.
- Blocking the elevator of the building for performing our work, first to enter the shopping and then to remove it (with the corresponding damage to the neighbors).
- Suffering the agonizing problem that the garage door get closed with the key inside, and half of the shopping next to the door and the other still in the trunk of the car that is open, by having the hands busy with the bags (by compulsorily being closing fire doors these should be automatic closed).
- Having neglected, at times, the products to enter in and exit from the garage, the elevator and the apartment.
- Having to leave the door of the apartment open when going to get more bags.
- Letting something forgotten in one of the downloading points.
- Etc.

In addition, once at the apartment and thanks to its design, we can arrange the purchased items directly from the trolley itself, without having to pass each bag to the counter, table or floor of the kitchen or larder.

All these problems are solved with the trolley object of the present invention.

### DETAILED DESCRIPTION OF THE INVENTION

The trolley object of the present invention is formed by a structure made of plastic material, with the appropriate sections to make it light enough while sturdy, having an L-shape in profile view. The rectangular base is about 50 cm. wide by 60 cm. long, made of four profiles at its ends and one central profile arranged lengthwise, and a frame on the back (vertical) made with three vertical profiles, two of them located at the ends and one central profile, and a final upper horizontal profile, having circular section, as a handle for pushing.

The entire assembly is mounted on four wheels, of which the two front one are rotating and the rear ones are fixed, and having a braking system, foot-operated, for ease its use in multi-leveled car parking.

The base is formed as a basket with its five sides made by way of panels with plastic lattice. The bottom panel placed on the profiles of the base, a rear panel, divided in two by the central vertical profile, placed matching with the outer side of vertical frame, and extending the entire height to the push handle, a front panel of approximately 20 cm. of height, hinged at the front panel of the base profile to be of the drop-down type, and two side panels also hinged at the base to be of the drop-down type. To be able to produce the dropping down of the basket, the axis of rotation of the side panels must be a few centimeters above the axis of rotation of the front panel, so that the front one is under the two side ones, and said dropping down may occur. For such purpose, a circumference arc-shaped slot is made in the side panels, along which a longitudinal bar located at the top of the front panel passes, which outside of each slot, at both ends, has a stopper so as not to open the side panels towards the outside, and which, by raising said front panel, is fixed in notches made at the end of the slot on the front of the side panels, thus achieving to maintain the basket open, and providing the necessary rigidity to the assembly. When the side panels are raised, these will be supported, in the back, on the inner side of the outer profiles that makes up the vertical frame. In order to close the basket it will be enough to simply pull up the longitudinal bar, overcoming the slight pressure to which a system with small springs is subjected, and unlocking thereof from the notches, being then able to drop down the front panel first and then the two side ones. With this, a flat surface will be achieved, this being defined by the outer sides of the side panels. To prevent each side panel from loosing stiffness due to the slot, a reinforcement that runs throughout its development and which also serves as a safety measure to prevent finger injury is positioned on the outside thereof. The side panels, seen in longitudinal section, will be thicker at the back, so as when dropped down, rest on the bottom panel, leaving the front part (thinner) resting on the front dropped down panel. Also, a notch will be made in the rear upper corner so as, when dropped down, not to rub on the central vertical profile of the rear frame. The three rear vertical profiles of the trolley, which form the vertical frame, have about 80 cm. of high and are divided along its length into two parts, the lower shorter one and the upper longer one, bound together by a bearing system as a hinge, that allows folding forward, just above the side panels of the lower basket once dropped down. Through this it will be achieve to fold the rear vertical part of the trolley on the surface formed by the dropped-down side panels, by supporting the profiles thereon. To achieve such purpose, the rear panel is also divided into two parts, matching the cut in the axis of rotation of the hinge. In its deployed position, the vertical frame forms a small angle backwards with respect to the vertical axis, thereby achieving to slightly delay the position of the push handle for facilitating the walking action while being pushed. This angle will not be excessive in order to prevent overturning the trolley when placing the first bags, or reducing the space when accessing the elevator or other confined spaces. Thanks to the arrangement of the rear panel coinciding with the outer side of the vertical profiles, after folding the vertical frame, a new flat surface with similar dimensions to the surface achieved by dropping down the side panels, but which allows placing larger items due to the lack of the rear vertical element of the trolley that limits said surface, is achieved. To make the surface completely free of obstacles, the handle of the trolley, of circular section, will be tangent to the plane of the rear side of the rear panel.

Attached to the inner side of the outer vertical profiles and on one of the lateral sides of the central vertical profile, are placed three bars of drop-down type made of plastic material, one for each profile, of about 50 cm. of length, lined with rubber material, non-slip and grooved at the top, having undulations also made at the top and a small bump on the tip as a stopper. These bars are those which receive the bags of shopping that are placed hanging by their handles, and which thanks to the sharp design, will allow us to tilt the trolley in order to save a small slope, for example the height of a curb, without the bags slips and falls on the ground.

The folding system of the trolley is made with a ball bearing, one on each vertical profile, embedded within the same profile. Each bearing has an inner toothed cylinder for receiving a pin attached to two plates at its ends, which will be attached to the short part of the vertical profile (the one attached to the base of the structure), being the top of the profile (the longer one) joined to the outer cylinder of the bearing. The outer cylinder has two notches made therein wherein, when rotating, a metal stopper is fitted, located within the vertical profile, and secured in that position by a pressure system, just below the bearing, which keeps it steady when the profile is in deployed position, and which also fixes thereof when folded. To unlock the bearing, it will be enough to actuate a simple pedal mechanism, which overcomes the pressure and takes the stopper out its position. It is important that the stopper fixes the trolley in folded position so as we can safely handle and store it in vertical position with the obvious space saving.

The trolley has a sturdy fabric tape that is attached to the ends of the push handle and which is large enough so as, when the trolley is in deployed position, we can step on the pedal, that unlocks the three metallic stoppers, and, by holding the tape, we can fold the trolley with complete ease, letting the own weight of the vertical frame to make it lowering, controlling the descent so as not to cause a sharp drop, and also without the need of bending over ourselves. If we want to deploy thereof, we will step on the pedal and pull the tape in order to vertically raise the frame. This tape will also allow us, when using the trolley in its folded position with a load, to be able of pulling thereof in order to move the trolley. Furthermore, this tape also allows hanging thereof on the wall and thus saving space.

The dropping-down system having the three bars, designed to hang the bags, is similar to that described for the vertical profiles but with the exception that the bearing can not be embedded in the vertical profile, since the dropping-down plane would be the same as that of the vertical profiles and, when dropping down the bars, these would be ahead of the profiles preventing the vertical frame from rests on the surface of the side panels in the folding operation, therefore these must be next to the profile and thus not disturb said maneuver. It also differs in that in this case the fixation stops of the bars will be separately operated, enabling the use of one, two or all three indiscriminately.

For its storage supported on the ground, we will tilt the trolley, completely folded, on the rear wheels previously braked, by lifting through the front pulling the tape. In order to maintain the verticality in this new position, it is necessary to place, in the back of the outer vertical profiles, some blocks made of plastic material with non-slip rubber at the tip.

### Embodiment example

All the explanations included in the detailed description of the invention, do not intend to limit its scope. Here both the used materials, dimensions, and small elements and pieces making it up, are one possible embodiment, the basic idea of the invention being a trolley with a sturdy structure mounted on wheels, with two loading zones: a bottom zone formed with a foldable basket, and a top zone former by three bars of the drop-down type on which the bags of shopping can be hung. The rest of the details form a preferred embodiment, another possibility may be using metallic frames in the main structure, and maintaining the remaining in plastic material, and even the possibility that the whole assembly be made of metallic material. It should be noted that the solutions for folding the profiles, which can be solved with another type of element that acts as the hinge.

Here not only aesthetics come into play, but above all:
- First, the strength of the used materials so as the final product not to be a very heavy element, but at the same time withstands the weight of the load to be transported.
- And second, the final cost of manufacture, which will be key for the complete definition of all the elements that make it up, since the price of the trolley will be completely paid by each family, or each person if live alone, since it is a product for each apartment.

For such purpose, the construction of several prototypes on which will be made the necessary studies on dimensions, strength of materials, thicknesses of the material to be used, size and type of wheels, type of folding system in terms of dimensions and materials, final price of manufacture, etc., will be required.

### DESCRIPTION OF THE FIGURES

For better understanding that explained, some drawings in which the model of the preferred embodiment described in the detailed description of the invention are schematically represented. These drawings are just sketches by way of example, not limitative, because as I said, for the final embodiment it is necessary to manufacture previous prototypes.

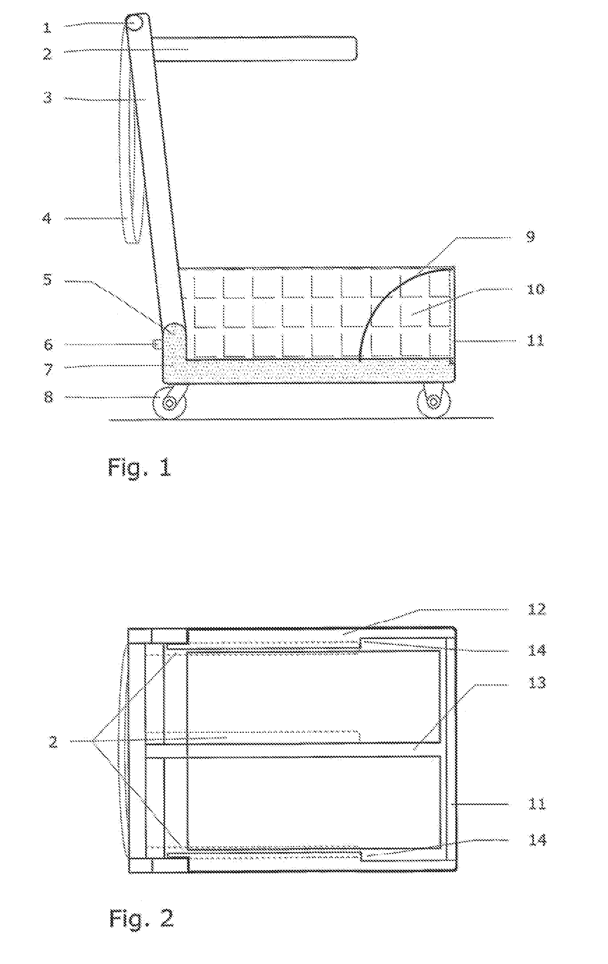

Figure 1 represents the trolley in profile view, in which the L-shaped structure, the horizontal base 7 that is mounted on four wheels 8 and the vertical frame 3 that is attached to the base 7 by using the bearing folding system 5 are shown. The top bar of the drop-down type 2 on which the bags will be hung, the position of the push handle 1, and the tape of resistant fabric material 4 are also shown. The position of the circumference arc-shaped slot 9 on the front part of the side panel 10 and extending to the top of the front panel 11 is clearly seen.
Figure 2 shows the floor of the trolley, the central profile of the base 13 arranged along thereof being well visible. The shape of the side panels 12 can also be seen, section of which is reduced at the front 14 in order to leave the space required by the front panel 11 once dropped-down. The top bars 2 have been represented with dashed lines in order to facilitate the view of the strokes.

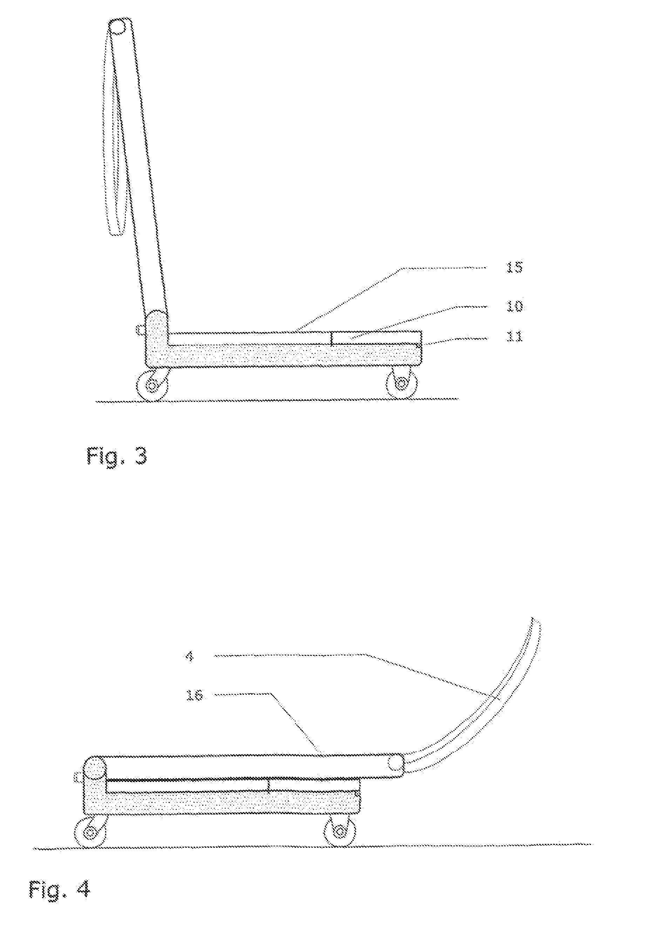

Figure 3 represents the profile view of the trolley with the front side 10 and front 11 panels of the lower basket dropped-down, clearly showing how the flat surface 15 is formed.
Figure 4 shows the trolley completely folded, a new flat surface 16 being formed, and clearly showing how the tape 4 can be used for pulling the trolley.
Figure number 5 corresponds to the elevation view of the back, in which the three independent dropping down axes 17 of the top bars 2, the three profiles 3 forming the vertical frame of the trolley, the rear panels 18 of the trolley (represented in sections so as to be able of seen the remaining elements), reaching to the push handle and which are placed between the profiles can be seen, and the outer rear side of the two panels and the three vertical profiles, the axis of rotation of the vertical frame 19 that defines the cut line of the rear panels 18, and the position of the pedal 20 that unlocks the metallic stoppers securing the bearings of the cylinder allowing the folding of the frame to be performed, matching on the same plane .

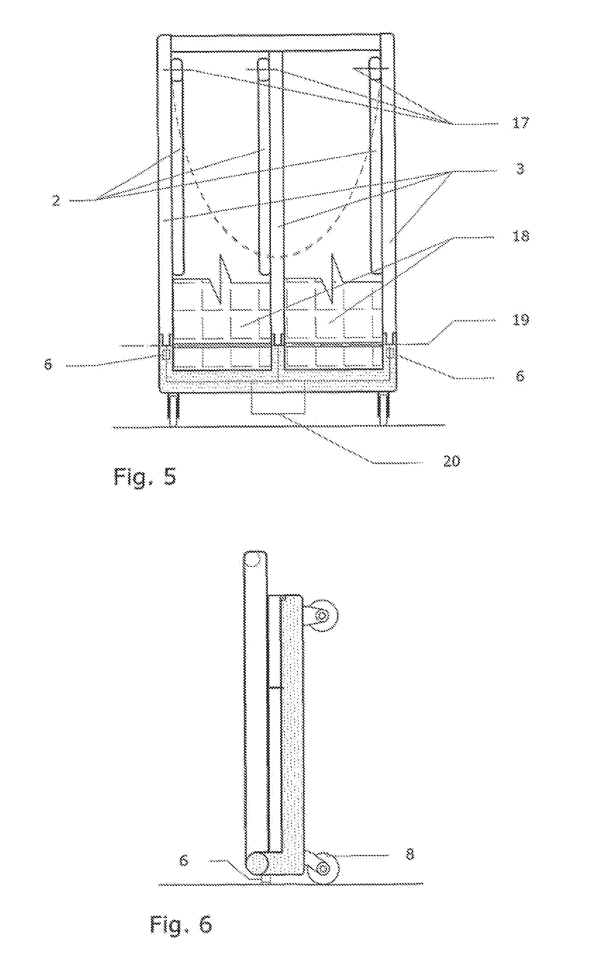

Finally, Figure 6 shows the trolley completely folded and in storage position, being supported on the ground by the rear wheels 8 and blocks made of plastic material with a non-slip rubber tip 6.

## Claims

1. Foldable trolley for transporting up to an apartment the shopping or other products purchased previously in a shop, having a sturdy structure mounted on wheels, **characterized by** having two loading zones, one bottom zone formed with a basket having drop-down sides, and one top zone formed by three bars, also of the drop-down type, on which the bags of shopping can be hung.

2. Foldable trolley according to claim 1 **characterized by** being completely foldable, greatly reducing its volume and facilitating its storage.

3. Foldable trolley according to claim 1 wherein the lower basket is **characterized by** having three drop-down sides on the base for creating a loading flat surface.

4. Foldable trolley according to claim 1 **characterized by** having a fully foldable vertical frame on the surface formed by the dropped-down side panels and in that, thanks to its rear panel and the position of the push handle, it creates a new loading flat surface without obstacles.

5. Foldable trolley according to claim 1 **characterized by** having a sturdy fabric tape attached to the ends of the push handle, which rotates around the axis of said handle, and which serves for it hanging storage, for pulling the trolley when is in folded position, and for facilitating the folding and unfolding operation of the vertical frame.

6. Foldable trolley according to claim 1 **characterized by** having three bars of the drop-down type, lined with rubber material, this rubber being non-slippery and having groove at the top, with undulations also made at the top and a small bump on the tip as a stopper.
It consists of a trolley with a sturdy structure (7 and 3) mounted on wheels (8), which has two loading zones, a bottom zone formed with a basket having drop-down sides (10 and 11), and one top zone formed by three bars (2) on which the bags can be hung, also of the drop-down type, and which is designed for transporting the shopping up to the apartment. It is foldable thanks to a rotation system (5) included in the profiles of the rear vertical frame (3). It can be configured in several manners, e.g. all deployed, or with the panels of the basket (10 and 11) and the top bars (2) dropped down creating a first loading flat surface, or with the vertical frame (3) folded creating other loading flat surface.
